# EUROPEAN PATENT APPLICATION

(11) **EP 3 015 742 A1**
(43) Date of publication of application: **04.05.2016**
(21) Application number: 14817239.8
(22) Date of filing: 05.06.2014
(51) Int. Cl.: F16H 55/26

(54) **RACK AND RACK MANUFACTURING METHOD**

(30) Priority: 24.06.2013 JP 2013131389
(71) Applicant: Nitta Corporation, Osaka-shi, Osaka 556-0022 (JP)
(72) Inventor: AOKI Kenichiro, Yamatokoriyama-shi Nara 639-1085 (JP); KIYOHARA Yoshiharu, Yamatokoriyama-shi Nara 639-1085 (JP); DEI Takehito, Yamatokoriyama-shi Nara 639-1085 (JP); ISHIZAKI Yoji, Yamatokoriyama-shi Nara 639-1085 (JP); AOKI Yasuhiro, Yamatokoriyama-shi Nara 639-1085 (JP)
(74) Representative: Vossius & Partner Patentanwälte Rechtsanwälte mbB
(86) International application number: PCT/JP2014/064915
(87) International publication number: WO 2014/208305

(57) **Abstract**

Provided is a rack manufacturing method capable of easily manufacturing even a rack such as a helical rack or a herringbone rack that is more difficult to work than a spur rack. A rack manufacturing method comprising a step for laminating a plurality of thin plates (3) in each of which rack teeth are formed, the rack manufacturing method comprising: a step for laminating and securing the thin plates (3) to each other while the axial positions of the rack teeth of the thin plates (3) adjacent to each other are displaced; and a step for covering the rack teeth (2) of the laminated thin plates (3) with a member having excellent wear resistance and rub resistance.

## Description

### FIELD OF THE INVENTION

The present invention relates to a rack composed of laminated thin plates, and its manufacturing method.

### DESCRIPTION OF THE BACKGROUND ART

An example of this kind of rack is disclosed in patient document 1. The disclosed racks in patent document 1 are composed of laminated thin plates having rack teeth with a tooth trace in a direction perpendicular to the axial directions. These racks function as spur racks and are used together with spur pinions to constitute a rack and pinion mechanism.

### (Prior Art Documents)

### (Patent Documents)

Patent Document 1 Japanese Patent Application Publication No. 2010-89964

### SUMMARY OF THE INVENTION

### (Problems to be Solved)

It is well known that the rack and pinion mechanism consisting of a helical rack and a helical pinion or consisting of a herringbone rack and a herringbone pinion generates lower tooth hit noise than the rack and pinion mechanism consisting of a spur rack and a spur pinion.

However, compared to spur racks, helical racks are difficult to manufacture, and herringbone racks are even more difficult to manufacture because of their complicated forms.

The present invention provides a rack capable of being easily manufactured even though it is usually more difficult to manufacture when compared to spur racks, such as helical racks, or herringbone racks, and their methods of manufacture.

### (Means for Solving Problems)

[1] The present invention provides a rack composed of laminated thin plates with rack teeth, wherein said thin plates adjacent to each other are laminated and fixed together so that their rack teeth positions in the axial directions are displaced.
   In the construction [1], the thin plates are laminated so that their rack teeth are displaced in the axial directions, which allows the formation of racks with arbitrary shapes, thus making it easy to manufacture racks in complicated shapes that have been difficult thus far to manufacture.
[2] The present invention provides a rack according to [1], wherein said rack teeth are covered with a member that exhibits high wear resistance and low friction.
   In the construction [1], the relative displacement between the rack teeth in the axial directions causes unevenness between the flanks of the teeth, which may require improving abrasion and friction resistance. This problem is solved in the construction [2] by covering the rack teeth with a member that exhibits high wear resistance and low friction.
[3] The present invention provides a rack manufacturing method involving a step in which thin plates with rack teeth are laminated and then fitted together so that the rack teeth of the thin plates adjacent to each other are displaced in the axial directions.
   In the construction [3], the thin plates are laminated so that the rack teeth of the thin plates adjacent to each other are displaced in the axial directions, which allows the formation of arbitrary rack shapes, thus permitting easy manufacturing of complicated rack shapes that have been difficult thus far to manufacture.
[4] The present invention provides a rack manufacturing method that includes the construction [3], which comprises a step wherein the rack teeth of said laminated thin plates are covered with a member that exhibits high wear resistance and low friction.

In the construction [3], the relative displacement between the rack teeth in the axial directions causes unevenness between the tooth flanks, which may require improved abrasion and friction resistance. This problem is solved in the construction [4] by covering the rack teeth with a member that exhibits high wear resistance and low friction.

### BRIEF DESCRIPTION OF THE DRAWINGS

FIG. 1 is a perspective view of a rack in an embodiment of the invention.
FIG. 2 is a perspective view of a thin plate.
FIG. 3 is a perspective view of laminated thin plates forming a herringbone pattern of tooth traces.
FIG 4 is a plan view of the laminated thin plates. Note that the tops of the rack teeth are blacked out to clarify how these rack teeth are displaced between adjacent thin plates.
FIG. 5 shows how a cover made of fibers impregnated with rubber or resin is adhered to the rack teeth of the laminated thin plates.
FIG. 6 is a perspective view of laminated thin plates forming a helical pattern of tooth traces.
FIG 7 shows how a cover made of fibers impregnated with rubber or resin is adhered to the rack teeth of the laminated thin plates.

### DESCRIPTION OF EMBODIMENTS OF THE INVENTION

Below is a description of a rack and its manufacturing method according to an embodiment of the present invention with reference to the figures.

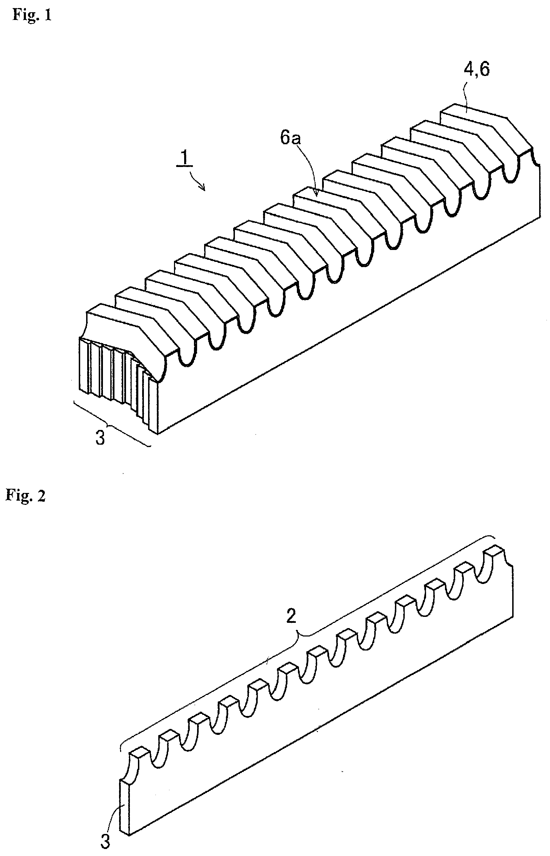

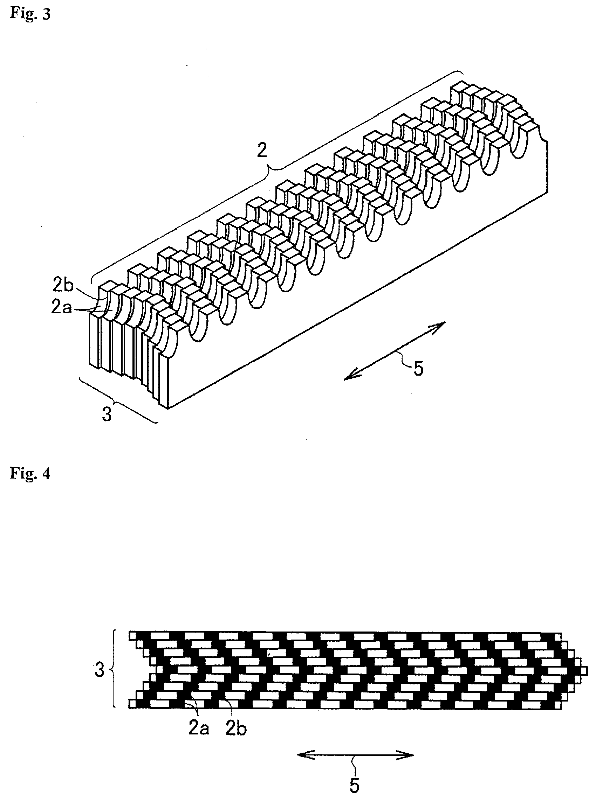

The rack (1) illustrated in FIG. 1 is manufactured using a rack manufacturing method according to an embodiment of the present invention. This rack (1) is a herringbone rack and meshes with a herringbone pinion (not illustrated) to constitute a rack and pinion mechanism. The rack (1) is composed of laminated thin plates (3) with rack teeth (2) like the one illustrated in FIG. 2. As shown in FIG. 3, the thin plates (3) adjacent to each other are laminated and fixed together so that their rack teeth (2) are displaced to each other in the axial directions (indicated by the double-headed arrow (5)). Then these rack teeth (2) are covered with a member that exhibits high wear resistance and low friction (a member being less subject to abrasion and having lower friction resistance). As a member exhibiting high wear resistance and low friction, this embodiment uses fibers (4) impregnated with rubber or resin.

The rack (1) is manufactured by a method which comprises the following steps: a thin plate manufacturing step to manufacture thin plates (3) with rack teeth (2); a thin plate laminating step to laminate these thin plates (3) and fix them together; and a cover adhering step to adhere a cover (6) made of fibers (4) impregnated with rubber or resin to the rack teeth (2) of the thin plates (3). What follows is a detailed description of the respective steps.

The thin plate manufacturing step manufactures thin plates (3) with rack teeth (2) like the one illustrated in FIG. 2 by punching a thin iron sheet. The punching die can have substantially the same shape as the contour shape of an ordinary spur rack when viewed from one side. The sheet material to be punched depends on the intended use of the rack (1) to be manufactured, and may be metals other than iron, resin and so forth depending on the intended use.

The thin plate laminating step laminates the thin plates (3) (nine plates in this embodiment) manufactured in the preceding thin plate laminating step, so that positions of the rack teeth (2) in the axial directions of the adjacent thin plates (3) are displaced at predefined degrees, and fixes the thin plates (3) together. As shown in FIGS. 3 and 4, the positions of the rack teeth (2) are displaced to each other in the axial directions (indicated by the double-headed arrow (5)) to predefined degrees and fixed with each other so that the tooth traces of the rack teeth (2) of the thin plates (3) form a herringbone pattern. Note that FIG. 4 has blacked out the tops of the rack teeth (2) to clarify how these rack teeth (2) are displaced between the thin plates (3).

The fixation in the thin plate laminating step can adopt a variety of methods. One example is that the thin plates (3) can have adhesive applied to their matching faces before the thin plate laminating step and then the laminated thin plates (3) after the thin plate laminating step are tightly attached to each other at predefined pressure to fix thin plates (3) without relative displacement between them. Another example is that the laminated thin plates (3) after the thin plate laminating step have holes pierced through their whole thickness, which allows thin plates (3) to be fixed without relative displacement between them by inserting a bolt into the through hole to fasten the laminated thin plates (3) with a nut.

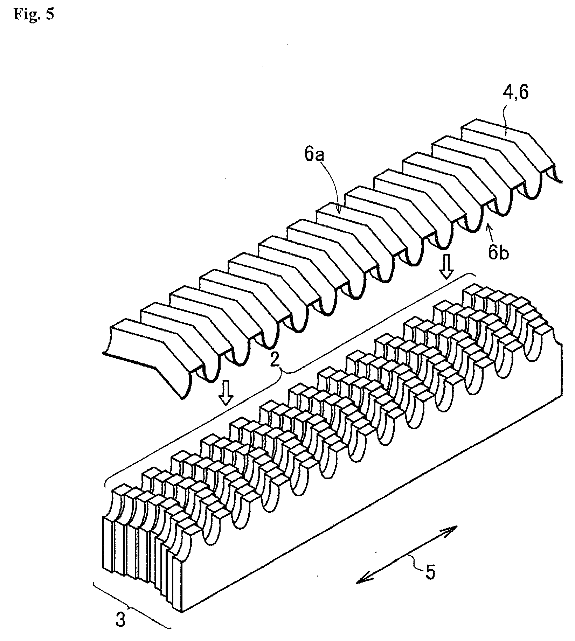

The cover adhering step adheres a cover (6) made of fibers (4) impregnated with rubber or resin to the rack teeth (2) of the laminated thin plates (3) to cover the rack teeth (2) with the cover (6). As shown in FIG. 5, the cover (6) has an outer face (6a) formed in accordance with the rack teeth shape of an ordinary herringbone rack, and an inner face (6b) in a convex-concavo shape (not illustrated) corresponding to the concavo-convex shape made by the rack teeth (2) of the laminated thin plates (3). As shown in FIGS. 3 and 4, an unevenness is generated between the tooth flanks (2a) of the rack teeth (2), which are displaced to each other in the axial directions, immediately after the thin plate laminating step, but this problem of uneven appearance is solved by covering the rack teeth (2) with the cover (6).

This is how the rack (1) illustrated in FIG 1 is manufactured. The following is an additional description of the fibers (4) impregnated with rubber or resin.

The fibers (4) can be made of, for example, aramid fiber, nylon, urethane, cotton, silk, linen, acetate, rayon, fluorine-containing fiber or polyester. Fibers are impregnated with rubber or resin. The fiber form can be staple or filament fibers.

Impregnating fibers with rubber or resin allows rubber or resin material to fill the gaps among the fibers and bond these fibers together into a sheet, which can function as the cover (6). Moreover, impregnating fibers with rubber or other material reduces the wear due to friction among fibers and improves the resistance of the cover (6) to wear generated between the cover (6) and a pinion gear.

Any type of rubber can be used, as long as the fibers can be impregnated with it. The fibers can be impregnated with, for example, urethane rubber, nitrile rubber, silicone rubber, fluoro-rubber, acrylic rubber, ethylene-propylene rubber, butyl rubber, isoprene rubber, chlorinated polyethylene rubber, epichlorohydrin rubber, hydrogenated nitrile rubber, chloroprene rubber, polybutadiene rubber, styrene-butadiene rubber, natural rubber, or those rubbers that have been independently denaturalized in various ways. These rubbers can be used solely, and those made by blending multiple types of rubbers can also be used. In addition, the rubbers may be blended with appropriate amounts of traditional compounding ingredients for rubber, such as vulcanizing agent, vulcanizing accelerator, antioxidant, softener, plasticizer, filler and colorant. The above mentioned rubbers can be replaced by or combined with thermoplastic or thermosetting resins such as acrylic resin, polyester resin, urethane resin, vinyl chloride resin, polypropylene, polycarbonate, polyethylene terephthalate resin, fluorine resin, polyethylene, acrylonitrile-styrene resin, acrylonitrile-butadiene-styrene resin, polystyrene resin, polyvinyl chloride, polyvinylidene chloride, polyvinyl acetate, nylon, alkyd resin, phenolic resin, epoxy resin and polyphenylene sulfide resin.

In the impregnation of the fibers with a rubber or resin mentioned above, it is preferred that the rubber or resin is dissolved with a solvent or other means into the form of a liquid before dipping the predefined fibers (staple fibers, filament fibers or fabric) in the liquid. In practice, it is possible to use a sheet-like fabric made of fibers as a precursor of the cover (6) to be adhered to the rack teeth (2). This sheet-like fabric is impregnated with rubber or resin in the same way as described above.

The fabric can, for example, be non-woven fabric made of irregularly tangled fibers or woven or knitted fabrics that have a regular form. Since the fabrics have a sheet-like structure, these fabrics characteristically allow easier impregnation with rubber or other material (easy handling). The texture of the woven fabric can be a plain weave, satin weave, twill weave, or other applied texture.

### Effects of the embodiment of the invention

In the rack manufacturing method according to this embodiment, the thin plates (3) are laminated so that their rack teeth (2) are displaced in the axial directions, which allows forming of racks in arbitrary shape such as herringbone, thus realizing easy manufacture of complicated rack shapes, such as herringbone racks, that have thus far been difficult to manufacture.

In the rack (1) according to this embodiment, laminating thin plates (3) in a displaced state to each other in the axial directions causes unevenness between the tooth flanks (2a) of the rack teeth (2). Therefore it is undesirable to mesh the rack (1) with an ordinary herringbone pinion without covering the rack teeth (2) with a cover 6, which results in excessive wear of the edges (2b) of the rack teeth (2) generated du6e to unevenness between the tooth flanks (2a). However, this problem is solved in the rack (1) according to this embodiment because the rack teeth (2) and their edges (2b) are covered with the cover (6) that exhibits high wear resistance and low friction.

In the rack (1) according to this embodiment, the rack teeth (2) are covered with a member that exhibits high wear resistance and low friction (the cover (6) made of fibers (4) impregnated with rubber or resin), which ensures that the rack and pinion mechanism, in which the rack (1) meshes with a herringbone pinion, reduces tooth hit noise and frictional resistance between the rack and the herringbone pinion.

### Modified examples of the embodiment

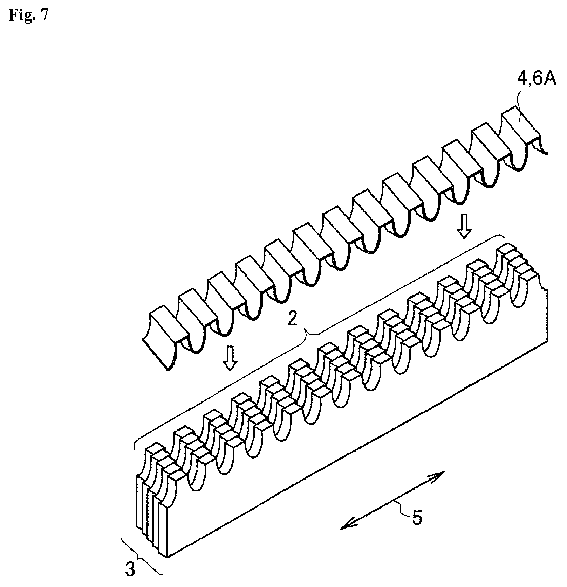

The above embodiment of the invention described how to manufacture herringbone racks, but changing the displacement of the rack teeth (2) of the thin plates (3) in the axial directions in the thin plate laminating step allows easy manufacturing of any kind of racks or racks with any tooth form. For example, in the thin plate laminating step, if the thin plates (3) are laminated and fixed together so that their rack teeth (2) are displaced to each other in the axial directions to form a helical pattern as shown in FIG. (6), and covered with and attached to a cover (6A) made of fabric (4) impregnated with rubber or resin, which has a shape corresponding to the rack teeth 2, as shown in FIG. 7, the helical rack exhibiting low tooth hit noise, high wear resistance and low friction can be manufactured.

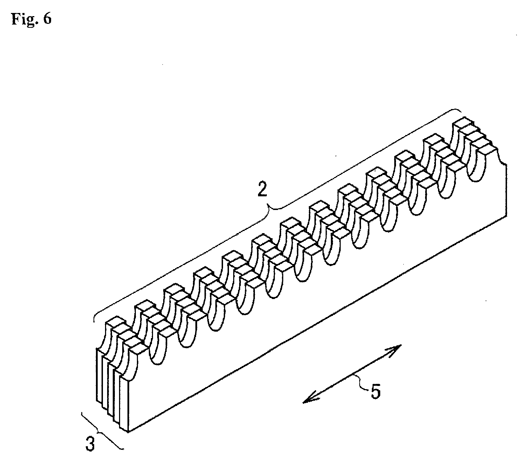

The racks described above are composed of covers (6), (6A) made of fibers (4) impregnated with rubber or resin, which are adhered to the rack teeth 2 of the laminated thin plates (3). However, racks without the covers (6), (6A) as shown in FIGS. 3 and 6 may be used as racks as they are or racks modified by some technique.

In the rack manufacturing methods according to the embodiment described above, the covers (6), (6A) of fibers (4) impregnated with rubber or resin is laid over the whole of the rack teeth 2. However, the covering may be limited or minimized to at least the parts (tooth flanks (2a), etc.) of the rack teeth (2) that come into contact with a pinion gear.

In the embodiment described above, the fibers (4) impregnated with rubber or resin may be replaced by rubber or resin into which staple fibers are incorporated.

Concrete constructions according to the present invention are not limited to the embodiments described above with reference to the figures. The scope of the present invention is defined not by the above description of embodiments but by the claims, and also covers equivalents of the claims as well as all modifications within the scope of the claims.

### (Reference Numerals)

1 Rack
2 Rack teeth
3 Thin plates
4 Fibers impregnated with rubber or resin (a member that exhibits high wear resistance and low friction)

## Claims

1. A rack comprising laminated thin plates with rack teeth, wherein said thin plates adjacent to each other are laminated and fixed together so that their rack teeth positions are displaced in the axial directions.

2. The rack according to claim 1, wherein said rack teeth are covered with a member that exhibits high wear resistance and low friction.

3. A rack manufacturing method involving a step to laminate thin plates with rack teeth, which comprises a step wherein said thin plates are laminated and fixed together so that positions of the rack teeth of adjacent thin plates are displaced in the axial directions.

4. The rack manufacturing method according to claim 3, which comprises a step wherein the rack teeth of said laminated thin plates are covered with a member that exhibits high wear resistance and low friction.
